(19) **Europäisches Patentamt European Patent Office Office européen des brevets**

(11) **EP 1 946 247 B1**

(12) **FASCICULE DE BREVET EUROPEEN**

(45) Date de publication et mention
de la délivrance du brevet:
**19.10.2011 Bulletin 2011/42**

(51) Int Cl.:
***G06K 9/62*** *(2006.01)*

(21) Numéro de dépôt: **06819224.4**

(86) Numéro de dépôt international:
**PCT/EP2006/068028**

(22) Date de dépôt: **02.11.2006**

(87) Numéro de publication internationale:
**WO 2007/054458 (18.05.2007 Gazette 2007/20)**

(54) **PROCEDE D'AIDE A LA PRISE DE DECISION POUR LA COMPARAISON DE DONNEES BIOMETRIQUES**

VERFAHREN ZUR HILFE BEIM TREFFEN EINER ENTSCHEIDUNG ÜBER BIOMETRISCHE DATEN

METHOD FOR ASSISTING IN MAKING A DECISION ON BIOMETRIC DATA

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.11.2005 FR 0511353**

(43) Date de publication de la demande:
**23.07.2008 Bulletin 2008/30**

(73) Titulaire: **Thales**
**92200 Neuilly Sur Seine (FR)**

(72) Inventeur: **BEAUDET, Jean**
**42410 PELUSSIN (FR)**

(74) Mandataire: **Chaverneff, Vladimir et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 5 661 666      US-A1- 2003 031 348**

- **PRABHAKAR S ET AL: "Decision-level fusion in fingerprint verification" PATTERN RECOGNITION, ELSEVIER, KIDLINGTON, GB, vol. 35, no. 4, avril 2002 (2002-04), pages 861-874, XP004329459 ISSN: 0031-3203**

## Description

La présente invention se rapporte à un Procédé d'aide à la prise de décision pour la comparaison de données biométriques.

Pour comparer les données biométriques rotatives à deux individus et déterminer s'il s'agit de la même personne (on parle alors d'un doublon) ou de personnes différentes (non-doublons), on peut disposer de plusieurs données numériques. Celles-ci correspondent par exemple aux scores de comparaison de chacun de leurs dix doigts. La présente demande s'intéresse plus particulièrement à la fusion des scores de ces données, afin de prendre au mieux la décision doublon/non-doublon. Les mesures usuelles de performance de comparaison sont des taux d'erreur, à savoir :

- Le FAR (False Acceptance Rate), qui est un taux de classement « doublon » pour des données d'individus qui sont en réalité différents.
- Le FRR (False Rejectance Rate) qui est un taux de classement « non-doublons » pour des données appartenant en réalité au même individu.

Lorsque l'on doit traiter un grand nombre de scores de comparaison différents, par exemple ceux relatifs aux dix doigts d'un individu, en vue d'une prise de décision unique, on réalise la fusion de ces scores. Dans ce cas, l'opérateur de fusion est efficace si, pour un FAR donné, il minimise le FRR (ou inversement, si, pour un FRR donné, il minimise le FAR).

Pour réaliser la fusion, on calcule la moyenne géométrique m des scores de comparaison de chacun des dix doigts. A l'aide d'une simple comparaison de m avec un seuil, on prend la décision « doublon » ou « non doublon ». Le seuil est déterminé expérimentalement par des mesures faites sur un échantillon de données. Un tel procédé connu a cependant les inconvénients suivants :

- Il traite mal le cas où certaines données numériques ne sont pas disponibles (par exempte parce qu'il n'est pas possible d'acquérir l'image des empreintes de certains doigts).
- Il s'applique de façon peu efficace aux scores fournis par certains opérateurs de comparaison. Par exemple, dans le cas de deux opérateurs, il impose une branche d'hyperbole en tant que frontière de décision, ce qui ne permet pas toujours d'obtenir une solution optimale.
- Il présuppose que les différents opérateurs de comparaison fournissent des scores homogènes, ce qui n'est par exemple pas le cas si l'on veut fusionner des scores d'empreintes digitales avec des scores de reconnaissance faciale.

On connait d'après le document US-A-5 661 666 un système de fusion de données hétérogènes mettant en oeuvre deux seuils, ce qui nécessite de recommencer un cycle d'apprentissage à chaque réglage de ces seuils. Le document de Prabhakar et al « Decision-level fusion fingerprint verification « Pattern recognition, Elsevier, vol 35, N° 4, avril 2002, pages 861-874, ISSN 0031-3203, décrit un procédé de fusion de données biométriques consistant à mesurer les distributions disjointes de scores de classifieurs, qui ne peut être mis en oeuvre en pratique pour des empreintes digitales, car cela reviendrait à calculer des distributions dans un espace de dimension 10. Enfin, le document US 2003/031348 A1 décrit un procédé de biométrie multimodale qui ne suggère pas la possibilité que l'un des classifieurs dont les données sont soumises à la fusion puisse ne pas donner de réponse.

La présente invention a pour objet un procédé d'aide à la prise de décision par un utilisateur pour la comparaison de données biométriques d'un individu avec celles d'une base de données relative à un grand nombre d'individus, en vue de la réduction du nombre de cas de la base, procédé permettant de traiter avec une qualité sensiblement constante les cas où l'on dispose de toutes les données nécessaires, comme les cas où certaines de ces données sont manquantes, ce procédé offrant une frontière de décision qui puisse s'adapter aux opérateurs de comparaison que l'on veut fusionner, en vue d'obtenir les meilleurs résultats possibles (par exemple une FRR la plus faible possible pour un FAR donné), ce procédé permettant également de fusionner des scores de comparaison non homogènes.

Le procédé conforme à l'invention est un procédé d'aide à la prise de décision par un utilisateur pour la comparaison de données biométriques d'un individu avec celles d'une base de données relative à un grand nombre d'individus, selon lequel on effectue une acquisition de données biométriques d'un individu considéré, on encode ces données, on les compare deux à deux avec des données correspondantes de la base de données, et il est caractérisé en ce que l'on établit pour chaque score ($S1$ à $Sn$) de comparaison le rapport fréquence d'apparition d'un doublon/fréquence d'apparition d'un non-doublon, que l'on calcule (1) le produit de tous les rapports disponibles, que l'on transcode ce produit (2) en valeur de FAR (False Acceptance Rate) à l'aide d'un ensemble de $2^n$ LUTs, dont chacune est associée à un et un seul des $2^n$ sous-ensembles possibles de LUTs, le contenu initial de cet ensemble de LUTs étant déterminé expérimentalement, et en effectuant une interpolation linéaire, que l'on compare à un seuil préfixé unique le résultat (4), le seuil déterminant la différence entre doublons et non-doublons, que l'on garde les valeurs supérieures au seuil préfixé (5) et que l'on soumet à l'utilisateur ce résultat pour qu'il le valide le cas échéant. Selon une autre caractéristique de l'invention, on effectue en cascade, après seuillage, au moins une autre sélection semblable à la première, avec un autre ensemble de scores obtenus dans d'autres conditions d'obtention de scores.

Selon une autre caractéristique de l'invention, on détermine le seuil par expérimentation sur des échantillons de la base de données.

Selon une autre caractéristique de l'invention, on utilise pour n données biométriques à comparer un ensemble de 2^n transcodeurs pour normaliser le produit des rapports disponibles, ces transcodeurs étant du type LUT. Chacune des 2^n LUT est associée à un et un seul des 2^n sous-ensembles possibles des indices des scores connus.

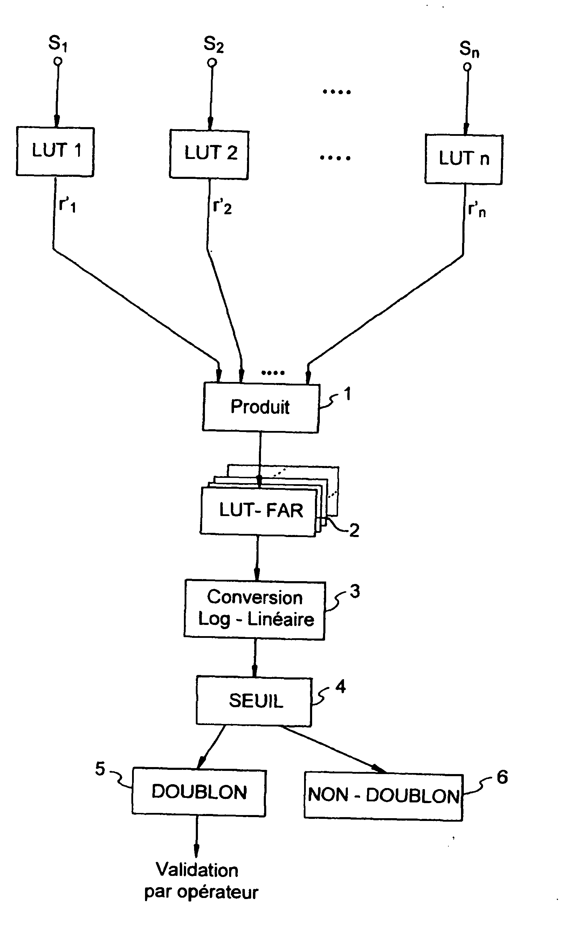

La présente invention sera mieux comprise à la lecture de la description détaillée d'un mode de réalisation, pris à titre d'exemple non limitatif et illustré par le dessin annexé, sur lequel la figure unique est un chronogramme des principales étapes du processus de fusion du procédé de l'invention.

Pour la mise en oeuvre du procédé de l'invention, on constitue d'abord une base de données biométriques à partir de données acquises de façon classique, puis numérisées et encodées. Cette base regroupe pour chacun des individus n données biométriques. Ensuite, on effectue un grand nombre de comparaisons (par exemple quelques milliers à quelques centaines de milliers) de ces données, d'une part entre non-doublons et d'autre part entre doublons. Chaque comparaison a pour résultat une liste s de n scores : s = (s1, s2, ... , sn). On appelle ND la classe des non-doublons et D la classe des doublons. On mesure les probabilités d'observation $fD(s_i)=P(si/D)$ pour les doublons et $fND(si)=P(si/ND)$ pour les non-doublons avec une méthode classique d'estimation de distributions, par exemple avec un noyau gaussien.

Pour réaliser la fusion des scores de ces différentes données, on décompose le problème global de la comparaison de n données biométriques différentes en $2^n$ sous-problèmes, en fonction des scores disponibles (le fait que des données parmi les n données envisagées soient indisponibles n'est pas rédhibitoire pour la mise en oeuvre du procédé de l'invention). Chacun de ces sous-problèmes est identifié par le sous-ensemble $I \subset [1,2,...n]$ des indices i pour lesquels les scores sont connus.

Pour chacun de ces sous-problèmes, on procède de la façon suivante. On définit :

$$r_I(s) = \prod_{i \in I} fD(s_i) / fND(s_i)$$

L'opérateur de classification réalise simplement un seuillage sur ce rapport $r_I(s)$. On en déduit la règle de décision suivante : on classe les observations successives en D si $r_I(s) >= R_I$ et en ND dans le cas contraire. Cependant plutôt que de maintenir $2^n$ seuils $R_I$ (un pour chaque sous-ensemble I possible) on préfère convertir $r_1$ en une valeur qui soit utilisable indépendamment de I. Pour chaque sous-problème on établit donc une table de correspondance $r_I$->FAR, suivant la onction : $x \mapsto P(_rI>x)$. C'est cette valeur qui est le score final sur lequel on prendra la décision D ou ND.

En référence à la figure unique du dessin, on va décrire le processus de fusion de données conforme à la présente invention. Pour ce faire, on suppose que l'on dispose de n empreintes digitales (n=10 dans ce cas) d'un individu et/ou autres données biométriques de cet individu. Pour chacune de ces empreintes, on effectue un « matching » (comparaison des empreintes de l'individu en question avec celles d'une base de données, par exemple un « matching de Hough » ) et on obtient à chaque fois un score de comparaison. Ce score est par exemple un entier de l'intervalle [0,1000]. Les différents scores Si correspondants sont notés S1, S2,....Sn en haut de la figure. Ces scores sont présentés chacun à l'entrée d'un convertisseur, respectivement LUT1, LUT2,....LUTn. Ces convertisseurs sont des tables de correspondance mémorisées dans des mémoires du type « Look-Up

Table » et fournissent chacun, pour chaque valeur de score d'entrée, le rapport $r_i$ étal à $fD(s_i)/fND(s_i)$, comme précisé ci-dessus. En outre, selon une caractéristique de l'invention, les valeurs de $r_i$ sont calculées selon une échelle logarithmique à base 10. Ainsi, un circuit 1. branché aux sorties respectives de tous les convertisseurs LUT1 à LUTn, présente à sa sortie le produit P de tous les $r_i$ , c'est-à-dire P= $(r_1* r_2*.... *r_n)$. Ce circuit 1 est constitué d'un simple additionneur qui effectue la somme des logarithmes de tous les $r_i$.

Le circuit 1 est suivi d'un ensemble 2 de $2^n$ transcodeurs (pour n données biométriques aux entrées S1 à Sn). Ces transcodeurs sont également du type LUT et ils sont chargés de transcoder P en valeur de score correspondant (également exprimé dans sa valeur logarithmique à base 10), c'est-à-dire en valeur de FAR. En outre, les transcodeurs dé l'ensemble 2 effectuent une interpolation. Cette interpolation est une interpolation linéaire en échelle log 10. Elle est nécessaire car les valeurs en entrée (les ratios rl) n'appartiennent pas à un ensemble fini (ce sont des nombres flottants).

Les scores disponibles à la sortie de l'ensemble 2 sous forme logarithmique sont convertis en valeurs linéaires par un circuit de conversion 3, puis envoyés à un circuit de seuillage 4. Ce circuit 4 compare le FAR ainsi calculé par les circuits qui le précèdent à un seuil qui représente le FAR réel de l'ensemble. Ce seuil est réglé de façon que le taux d'erreur pris en compte pour les traitements ultérieurs ne dépasse pas une valeur acceptable (par exemple pour qu'un opérateur humain examinant la sortie du circuit 5, mentionné ci-dessous, n'ait pas un trop grand nombre de vérifications à effectuer). Le circuit 4 comporte deux sorties 5 et 6, respectivement « doublon » et « non-doublon ». Un signal apparaît sur la sortie 5 lorsque la valeur de FAR issue du circuit 3 est inférieure au seuil du circuit 4, et sur la sortie 6 dans le cas contraire. On remarquera que dans le cas où un signal apparaît sur la sortie 5, un opérateur humain procède à des vérifications complémentaires de type classique pour ne valider que les réponses qu'il estime être bonnes.

## Revendications

1. Procédé d'aide à la prise de décision par un utilisateur pour la comparaison de n données biométriques d'un individu avec celles d'une base de données relative à un grand nombre d'individus, mis en oeuvre par un dispositif à LUTs, selon lequel on effectue une acquisition de données biométriques d'un individu considéré, on encode ces données, on les compare deux à deux avec des données correspondantes de la base de données, **caractérisé en ce que** l'on établit pour chaque score (S1 à Sn) de comparaison le rapport fréquence d'apparition d'un doublon/fréquence d'apparition d'un non-doublon, que l'on calcule (1) le produit de tous les rapports disponibles, que l'on transcode ce produit (2) en valeur de FAR (False Acceptance Rate) à l'aide d'un ensemble de 2^n LUTs-FARs, dont chacune est associée à un et un seul des 2^n sous-ensembles possibles des indices de scores connus, le contenu initial de cet ensemble de LUTs étant déterminé expérimentalement, et en effectuant une interpolation alinéaire, que l'on compare à un seuil préfixé unique le résultat (4), le seuil déterminant la différence entre doublons et non-doublons, que l'on garde les valeurs supérieures au seuil préfixé (5) et que l'on soumet à l'utilisateur ce résultat pour qu'il le valide le cas échéant.

2. Procédé selon la revendication 1, **caractérisé en ce que** l'on effectue en cascade, après seuillage, au moins une autre sélection semblable à la première, avec un autre ensemble de scores obtenus dans d'autres conditions d'obtention de scores.

3. Procédé selon la revendication 1 ou 2, **caractérisé en ce que** l'on calcule le produit des rapports disponibles en additionnant leurs logarithmes.

4. Procédé selon l'une des revendications précédentes, **caractérisé en ce que** l'on détermine le seuil par expérimentation sur des échantillons de la base de données.

5. Dispositif d'aide à la prise de décision mettant en oeuvre le procédé selon l'une des revendications 1 à 4, du type comportant un dispositif d'acquisition de données biométriques, un dispositif de codage de ces données, un dispositif de comparaison deux à deux de ces données, **caractérisé en ce qu'**il comporte, à chaque sortie de valeur de score (S1 à Sn) du dispositif de comparaison de données biométriques un dispositif convertisseur de valeur de score en rapports « fréquence d'apparition d'un doublon/fréquence d'apparition d'un non-doublon » comportant des LUTs (LUT1 à LUTn), les sorties de tous les dispositifs convertisseurs étant reliées à un dispositif multiplieur (1) suivi d'un ensemble de 2^n LUTs-FAR de transcodage de valeurs de produits en scores (2), d'un dispositif de seuillage (4) à seuil unique à deux sorties, « doublon » (5) et non-doublon » (6).

6. Dispositif selon la revendication 6, **caractérisé en ce que** les dispositifs convertisseurs fournissent des valeurs logarithmiques, que le dispositif multiplieur est constitué d'un additionneur et qu'un dispositif de conversion logarithmique-linéaire (3) est disposé entre l'ensemble de transcodeurs et le dispositif de seuillage.

## Claims

1. A process for assisting a user in making a decision when comparing n biometric data of an individual with that in a database related to a large number of individuals, implemented by an LUTs device, according to which the biometric data of a considered individual is acquired, encoding said data and comparing it pairwise with the corresponding data in the database, **characterised in that** for each comparison score (S1 to Sn) a doublet occurrence frequency/non-doublet occurrence frequency ratio is established, that the product of all of the available ratios is calculated (1), that said product (2) is transcoded into an FAR (False Acceptance Rate) value by means of a set of 2^n LUTs-FARs, each of which is associated with just one of the 2^n possible sub-sets of the known score indices, the initial content of said set of LUTs being experimentally determined and a linear interpolation being performed, that the product (4) is compared with a unique preset threshold, said threshold determining the difference between doublets and non-doublets, that the values above the preset threshold (5) are retained and that the user is provided with this result for them to validate if necessary.

2. The process according to claim 1, **characterised in that**, after thresholding, at least one other selection similar to the first is performed in a cascade like manner, with another set of scores obtained under other score finding conditions.

3. The process according to claim 1 or 2, **characterised in that** the product of the available ratios is calculated by adding their logarithms.

4. The process according to any one of the preceding claims, **characterised in that** the threshold is determined by experimenting on samples from the database.

5. A device for assisting decision making, which implements the process according to any one of claims 1 to 4, of the type comprising a device for acquiring biometric data, a device for encoding said data, a device for comparing said data pairwise, **characterised in that** it comprises, at each output of the score value (S1 to Sn) from the device for comparing biometric data, a device for converting the score value into a "doublet occurrence frequency/non-doublet doublet occurrence" ratio comprising LUTs (LUT1 to LUTn), the outputs of all of the converter devices being linked to a multiplying device (1) followed by a set of 2^n LUTs-FAR for transcoding the values of the products into scores (2), a thresholding device (4) with a single twin output threshold, "doublet" (5) and non-doublet" (6).

6. The device according to claim 6, **characterised in that** the converting devices provide logarithmic values, that the multiplying device is constituted by an adder and that a logarithmic-linear converting device (3) is arranged between the set of converters and the thresholding device.

**Patentansprüche**

1. Verfahren zum Assistieren eines Benutzers beim Treffen einer Entscheidung beim Vergleichen von n biometrischen Daten einer Person mit denen in einer Datenbank in Bezug auf eine große Zahl von Personen, implementiert durch eine LUT-Vorrichtung, mit der biometrische Daten einer betrachteten Person erfasst werden, Codieren dieser Daten und paarweises Vergleichen derselben mit entsprechenden Daten in der Datenbank, **dadurch gekennzeichnet, dass** für jede Vergleichswertung (S1 bis Sn) das Verhältnis zwischen Dublette-Auftretenshäufigkeit und Nicht-Dublette-Auftretenshäufigkeit ermittelt wird, dass das Produkt aller verfügbaren Verhältnisse berechnet (1) wird, dass dieses Produkt (2) in einen FAR-(False Acceptance Rate)-Wert mittels eines Satzes von 2^n LUTs-FARs transcondiert wird, die jeweils mit nur einem einzigen der 2^n möglichen Subsätze bekannter Wertungsindexe assoziiert ist, wobei der Anfangsgehalt dieses Satzes von LUTs experimentell und mittels einer linearen Interpolation ermittelt wird, dass das Ergebnis (4) mit einem eindeutigen voreingestellten Schwellenwert verglichen wird, wobei der Schwellenwert die Differenz zwischen Dubletten und Nicht-Dubletten bestimmt, dass die Werte über dem voreingestellten Schwellenwert (5) behalten werden und dem Benutzer dieses Ergebnis ggf. zum Validieren bereitgestellt wird.

2. Verfahren nach Anspruch 1, **dadurch gekennzeichnet, dass** nach der Schwellenwertbildung wenigstens eine andere Wahl ähnlich der ersten kaskadenartig durchgeführt wird, mit einem anderen Satz von Bewertungen, die unter anderen Wertungsfindungsbedingungen erhalten werden.

3. Verfahren nach Anspruch 1 oder 2, **dadurch gekennzeichnet, dass** das Produkt der verfügbaren Verhältnisse durch Addieren ihrer Logarithmen berechnet wird.

4. Verfahren nach einem der vorherigen Ansprüche, **dadurch gekennzeichnet, dass** der Schwellenwert durch Experimentieren an Proben aus der Datenbank ermittelt wird.

5. Vorrichtung zum Assistieren beim Fällen von Entscheidungen, die das Verfahren nach einem der Ansprüche 1 bis 4 ausführt, des Typs, der Folgendes umfasst: eine Vorrichtung zum Erfassen biometrischer Daten, eine Vorrichtung zum Codieren dieser Daten, eine Vorrichtung zum paarweisen Vergleichen der Daten, **dadurch gekennzeichnet, dass** sie an jedem Ausgang des Wertungswertes (S1 bis Sn) von der Vorrichtung zum Vergleichen biometrischer Daten eine Vorrichtung zum Umwandeln der Wertungswerte in Verhältnisse "Dublette-Auftretenshäufigkeit/Nicht-Dublette-Auftretenshäufigkeit" umfasst, die LUTs (LUT1 bis LUTn) umfasst, wobei die Ausgänge aller Wandlungsvorrichtungen mit einem Multiplikationsglied (1) verbunden sind, gefolgt von einem Satz von 2^n LUTs-FAR zum Transcodieren von Produktwerten in Wertungen (2), von einer Einzelschwellenwert-Schwellenwertbildungsvorrichtung (4) mit zwei Ausgängen, "Dublette" (5) und Nicht-Dublette" (6).

6. Vorrichtung nach Anspruch 6, **dadurch gekennzeichnet, dass** die Wandlungsvorrichtungen logarithmische Werte bereitstellen, dass das Multiplikationsgerät von einem Addierer gebildet wird und dass eine logarithmisch-lineare Wandlungsvorrichtung (3) zwischen dem Transcodersatz und der Schwellenwertbildungsvorrichtung angeordnet ist.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5661666 A
- US 2003031348 A1

**Littérature non-brevet citée dans la description**

- Pattern recognition. Elsevier, Avril 2002, vol. 35, 861-874